# EUROPÄISCHE PATENTSCHRIFT

(11) **EP 0 986 448 B1**
(45) Veröffentlichungstag und Bekanntmachung des Hinweises auf die Patenterteilung: **02.07.2003**
(21) Anmeldenummer: 98956815.9
(22) Anmeldetag: 22.10.1998
(51) Int. Cl.: B23D 51/02, B23D 59/00

(54) **ELEKTRISCHE HANDWERKZEUGMASCHINE**
MANUALLY OPERATED ELECTRIC MACHINE TOOL
MACHINE ELECTRIQUE PORTABLE

(30) Priorität: 19.12.1997 DE 19756766
(43) Veröffentlichungstag der Anmeldung: 22.03.2000
(73) Patentinhaber: ROBERT BOSCH GMBH, 70442 Stuttgart (DE)
(72) Erfinder: FUCHS, Wolfgang, D-70794 Filderstadt (DE); GANSEL, Eduard, D-72135 Dettenhausen (DE); ENGELFRIED, Uwe, D-73760 Ostfildern (DE)
(86) Internationale Anmeldenummer: DE9803066
(87) Internationale Veröffentlichungsnummer: WO99032249

(56) Entgegenhaltungen:
- EP-A- 0 127 014
- DE-A- 3 105 218
- DE-U- 9 006 973
- US-A- 2 422 221
- US-A- 2 783 792
- US-A- 3 189 997
- US-A- 3 901 117
- US-A- 5 438 758
- US-A- 5 468 247

## Beschreibung

### Stand der Technik

Die Erfindung geht aus von einer elektrischen Handwerkzeugmaschine, insbesondere Handsägemaschine, der im Oberbegriff des Anspruchs 1 definierten Gattung.

Es ist bereits eine elektrische Handsägemaschine dieser Art vorgeschlagen worden (DE 196 25 081 A1 oder GB 1 515 390), bei der der rückwärtige Teil des Schaftes des Maschinengehäuses als Handgriff gestaltet ist, mit dem die Handsäge beim Sägen gehalten wird.

### Vorteile der Erfindung

Die erfindungsgemäße elektrische Handwerkzeugmaschine mit den Merkmalen des Anspruchs 1 hat den Vorteil, daß durch die stabförmige Gestaltung des gesamten Schaftes und die Taillierung des Schaftendes im Übergangsbereich zum Kopf des Maschinengehäuses mit der damit verbundenen Griffumfangsreduzierung eine ergonomische, definierte Griffposition des Elektrohandwerkzeugs mit sicherem Halt in Nähe des Ein-/Ausschalters erzielt wird. Der Daumen des Bedieners liegt während des Betriebs automatisch in ergonomischer Lage auf dem Schalter auf, so daß eine erhöhte Sicherheit beim Ausschalten des Elektrohandwerkzeugs gegeben ist.

Durch die in den weiteren Ansprüchen aufgeführten Maßnahmen sind vorteilhafte Weiterbildungen und Verbesserungen der im Anspruch 1 angegebenen elektrischen Handwerkzeugmaschine möglich.

Gemäß einer bevorzugten Ausführungsform der Erfindung steht an der dem Werkzeug zugekehrten Unterseite des Kopfes des Maschinengehäuses eine etwa parallel zum Werkzeug sich erstreckende Schutzrippe auf jeder Seite des Maschinengehäuses vor. Diese Schutzrippen dienen als Fingerschutz und Fingerbegrenzung für den Bediener, so daß diese nicht versehentlich mit dem Werkzeug oder Werkstück in Eingriff gelangen können.

Gemäß einer vorteilhaften Ausführungsform der Erfindung ist die Front- oder Stirnseite des Kopfes des Maschinengehäuses unter einem Winkel von 45° zur Schaftachse abgeschrägt. Durch diesen am Gehäuse ausgebildeten 45°-Winkel ist bei Verwendung der Elektrohandwerkzeugmaschine als Feinschnittsäge eine Hilfsanlage beim Sägen eines 45°-Winkels gegeben.

Gemäß einer vorteilhaften Ausführungsform der Erfindung sind an mindestens einer, vorzugsweise an jeder, Gehäuseseitenfläche des Maschinengehäuses drei Auflage- und Befestigungspunkte zum Aufspannen des Maschinengehäuses auf eine Gehrungshilfe vorgesehen, die so angeordnet sind, daß sie die Eckpunkte eines Dreiecks bilden. Bevorzugt weisen die Auflage- oder Befestigungspunkte eine auf jeder Gehäuseseite abstehende Auflagerippe und zwei das Maschinengehäuse quer zur Schaftachse durchdringende Hohlzylinder auf, deren Zylinderöffnung in der Gehäusewand von einem in der Gehäusewand ausgebildeten Auflagebund konzentrisch umschlossen sind. Die Aufspannung des Maschinengehäuses auf der Gehrungshilfe erfolgt über Schrauben, die durch die beiden Hohlzylinder hindurchgesteckt werden, wobei die Auflagebunde an den Zylinderöffnungen der Hohlzylinder sicherstellen, daß das Maschinengehäuse beim Aufspannen nicht verspannt oder zerstört werden kann.

Gemäß einer bevorzugten Ausführungsform der Erfindung ist am Kopf des Maschinengehäuses eine Haltevorrichtung für einen quer über die Frontseite des Kopfes verlaufenden, quer abstehenden Anschlag angeordnet. Ein solcher Anschlag hat bei Verwendung der Elektrohandwerkzeugmaschine als Sägemaschine den Vorteil, daß das Werkstück bei einer auf Zug ausgerichteten Sägeverzahnung gegen den Anschlag gezogen wird und damit ein sicheres und genaues Arbeiten ermöglicht wird.

Gmäß einer vorteilhaften Ausführungsform der Erfindung ist der Anschlag mittels eines U-förmig abgewinkelten stabförmigen Bügels realisiert und die Haltevorrichtung weist einen das Maschinengehäuse quer zur Schaftachse durchdringenden Hohlzylinder zum vorzugsweise formschlüssigen Durchstecken des einen Bügelschenkels und eine an der Frontseite des Kopfes des Maschinengehäuses nahe dessen Unterseite in die Gehäusewand eingeformte Rinne zum Abstützen des anderen den Anschlag bildenden Bügelschenkels auf. Eine axiale Sicherung gegen Herausfallen des Bügels aus der Haltevorrichtung wird gemäß einer vorteilhaften Ausführungsform der Erfindung dadurch erreicht, daß der in den Hohlzylinder einsteckbare Bügelschenkel einen Einstich aufweist und im Maschinengehäuse ein Druckstück angeordnet ist, das mittels einer Druckfeder durch eine Ausnehmung in der Zylinderwand des Hohlzylinders hindurch in den Einstich formschlüssig eintaucht.

Gemäß einer alternativen Ausführungsform der Erfindung ist der in den Hohlzylinder einsteckbare Bügelschenkel des Bügels so lang ausgebildet, daß er auf der der Einsteckseite gegenüberliegenden Gehäuseseite aus dem Maschinengehäuse vorsteht. Der Bügelschenkel ist im Bereich seines Vorstehendes mit einem Schraubengewinde versehen, auf das eine Flügelmutter zum Festlegen des Bügelschenkels im Maschinengehäuse aufschraubbar ist.

Alle vorstehend beschriebenen Ausführungsformen der Erfindung dienen in Weiterbildung der Erfindung dem ergonomisch verbesserten Handhaben der und Arbeiten mit der Elektrohandwerkzeugmaschine.

### Zeichnung

Die Erfindung ist anhand eines in der Zeichnung dargestellten Ausführungsbeispiels in der nachfolgenden Beschreibung näher erläutert. Es zeigen:
- Fig. 1: eine perspektivische Darstellung einer elektrischen Handsägemaschine,
- Fig. 2: eine Stirnansicht der Handsägemaschine in Richtung Pfeil II in Fig. 1,
- Fig. 3: einen Längsschnitt der Handsägemaschine in Fig. 1,
- Fig. 4: eine Draufsicht der Handsägemaschine in Richtung Pfeil IV in Fig. 3, teilweise geschitten,
- Fig. 5: eine perspektivische Darstellung eines Ausschnitts des Maschinengehäuses.

### Beschreibung des Ausführungsbeispiels

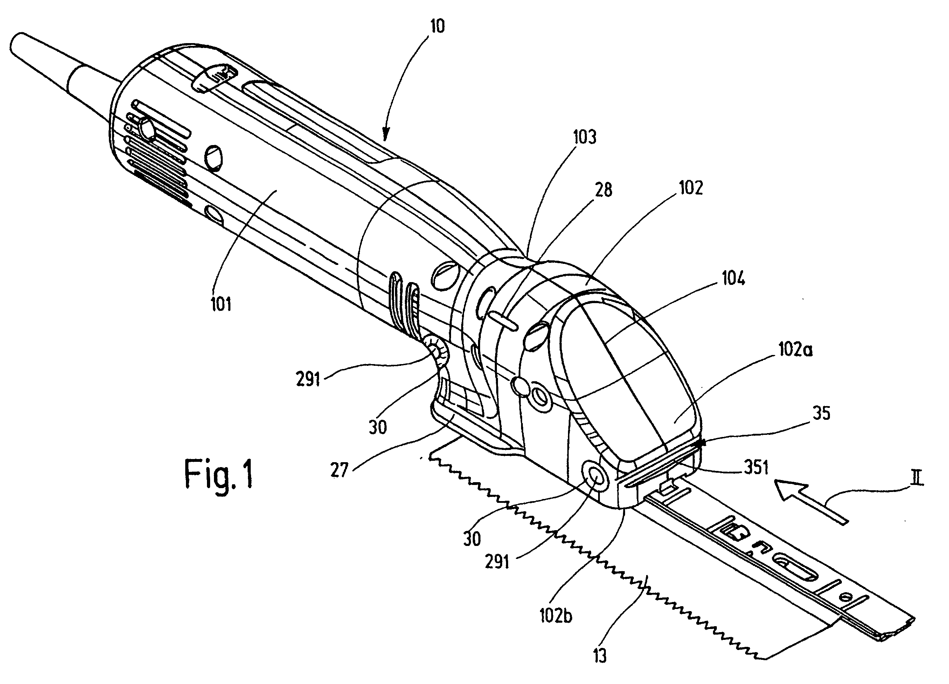

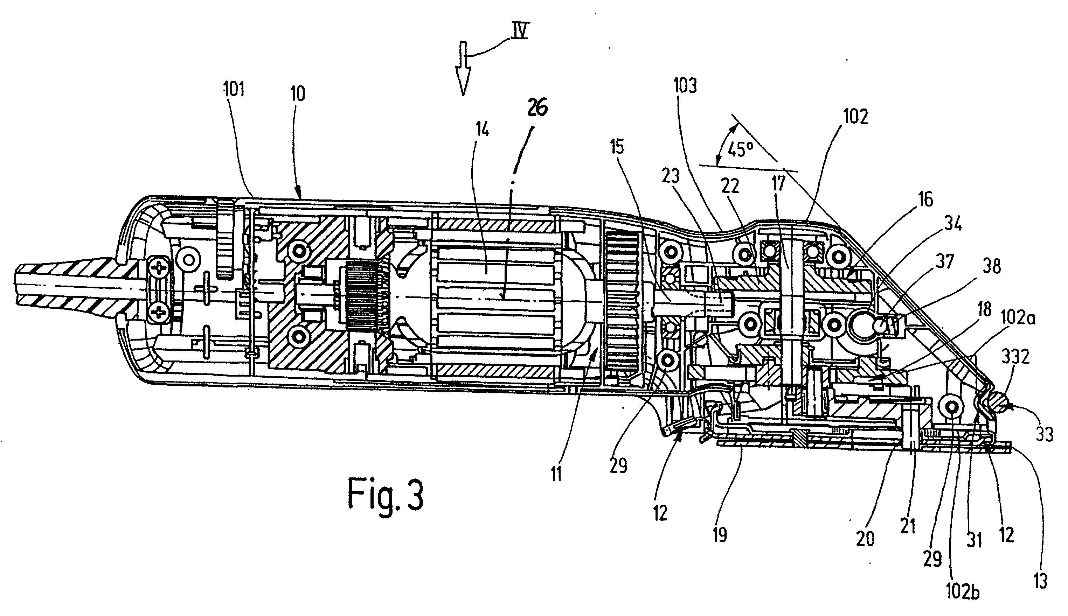

Die in Fi. 1 in perspektivischer Ansicht dargestellte elektrische Handsägemaschine als Ausführungsbeispiel für eine allgemeine elektrische Handwerkzeugmaschine mit oszillierend in einer Hin- und Herbewegung angetriebenem Werkzeug weist ein Maschinengehäuse 10 mit einem stabförmigen Schaft 101 und einem Kopf 102 auf, das aus zwei Gehäusehalbschalen zusammengesetzt ist. Die sich zwischen den Halbschalen bildende Trennfuge ist in Fig. 1 mit 104 bezeichnet. Im Übergangsbereich vom Schaft 101 zum Kopf 102 ist das Maschinengehäuse 10 tailliert, so daß hier eine Einschnürung 103 vorhanden ist. Wie aus der Schnittdarstellung in Fig. 3 hervorgeht ist im Maschinengehäuse 10 ein elektrischer Antrieb 11 aufgenommen, der ein an der Unterseite des Kopfes 102 mittels einer Einspannvorrichtung 12 gehaltenes Sägeblatt 13 in eine hin- und hergehende oszillierende Bewegung anzutreiben vermag. Der elektrische Antrieb 11 weist einen im Schaft 101 aufgenommenen, hier als Kommutatormotor ausgebildeten Elektromotor 14, dessen Rotorwelle 15 bis in den Einschnürungsbereich des Maschinengehäuses hineinragt, und ein im Kopf 102 angeordnetes Getriebe 16 auf, dessen rechtwinklig zur Rotorwelle 15 ausgerichtete Abtriebswelle 17 über einen Pleuelantrieb 18 das Sägeblatt 13 antreibt. Das Sägeblatt 13 ist in einer in der Einspannvorrichtung 12 festgelegten Führungsschiene 19 axial verschieblich geführt und über einen in ein Antriebsloch 20 im Sägeblatt 13 formschlüssig eingreifenden Antriebsfinger 21 mit dem Pleuelantrieb 18 gekoppelt. Auf der Abtriebswelle 17 sitzt drehfest ein Kronenrad 22, das mit einer Stirnverzahnung 23 am freien Ende der Rotorwelle 15 kämmt.

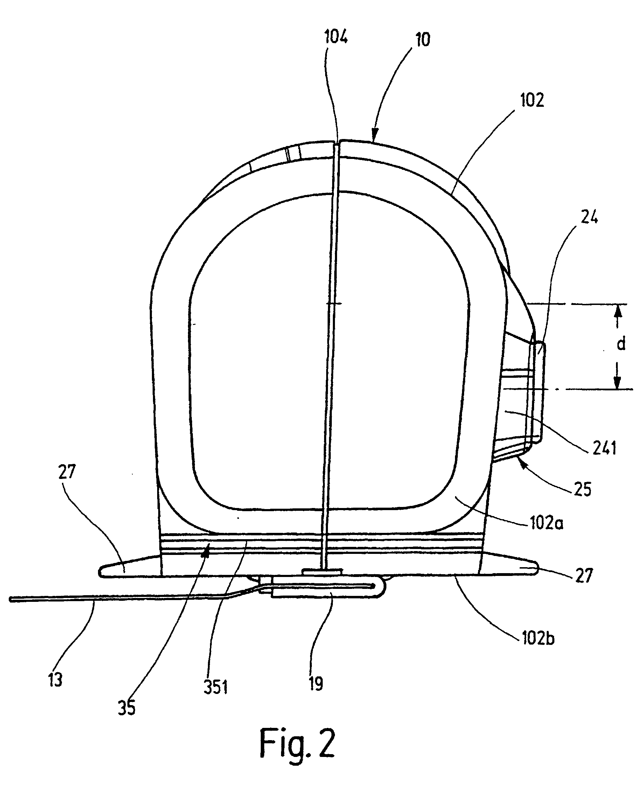

Wie in Fig. 2 zu sehen ist, ist ein Schaltschieber 24 eines Handschalters 25 zum Ein- und Ausschalten des Elektromotors 14 seitlich am Gehäusekopf 102 des Maschinengehäuses 10 unterhalb der Schaftachse 26 zum Sägeblatt 13 hin versetzt so angeordnet, daß beim Umgreifen der Einschnürung 103 der Daumen der Umgreifungshand auf einem am Schieber 24 ausgebildeten Betätigungsgriff 241 aufliegt. Der Betätigungsgriff 241 ist dabei so angeordnet, daß der Schaltschieber 24 mit dem aufliegenden Daumen in die Aus-Position des Handschalters 25 geschoben werden kann. Zum Zwecke des rechts- und linkshändigen Arbeitens mit der Sägemaschine kann an jeder Seite des Kopfes 102 ein Schaltschieber 24 des Handschalters 25 vorgesehen sein.

Zum Schutze der Finger der Umgreifungshand steht an der dem Sägeblatt 13 zugekehrten Unterseite des Kopfes 102 eine etwa parallel zum Sägeblatt 13 sich erstreckende Schutzrippe 27 auf jeder Seite des Maschinengehäuses vor (Fig. 1 und 2). Die beiden Schutzrippen 27, die einstückig an das Maschinengehäuse 10 angeformt sind, verhindern, daß die Finger versehentlich mit dem Sägeblatt 13 in Berührung kommen können.

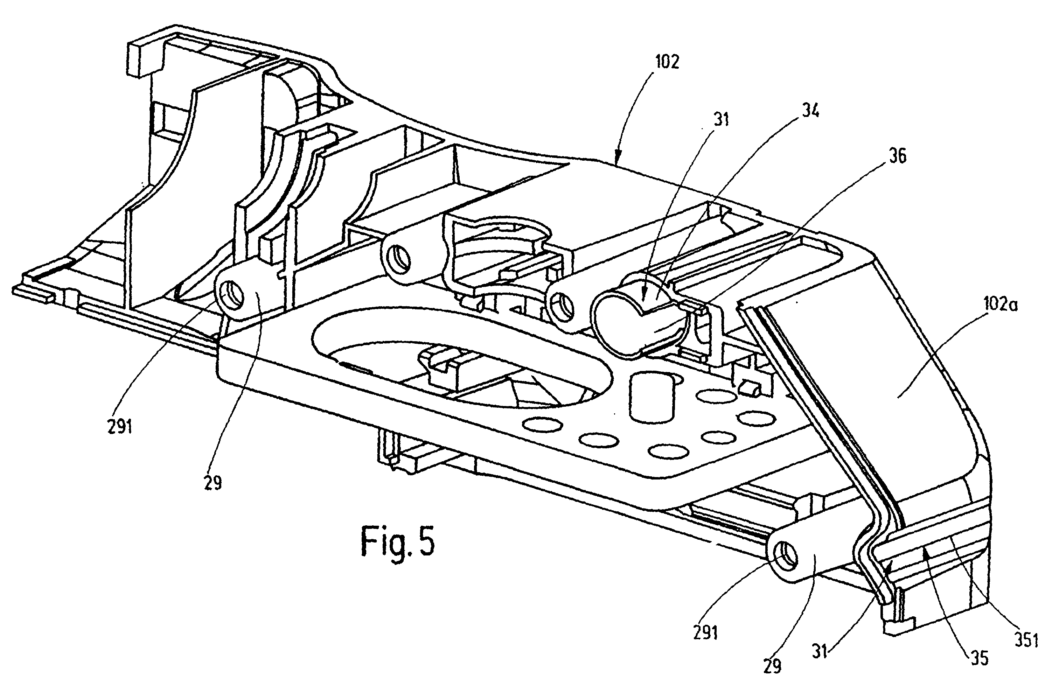

Wie in Fig. 3 angedeutet, aber auch aus Fig. 1 und 5 zu erkennen ist, ist die Front- oder Stirnseite 102a des Kopfes 102 unter einem Winkel von 45° zur Schaftachse 26 bzw. zu der mit der Schaftachse 27 parallelen Sägeblattebene abgeschrägt. Damit kann die Frontseite 102a als Hilfsanlage beim Sägen eines 45°-Winkels genutzt werden.

Wie in Fig. 1 dargestellt ist, sind an jeder Gehäuseseitenfläche des Maschinengehäuses 10 zum Aufspannen des Maschinengehäuses 10 auf eine Gehrungshilfe drei Auflagepunkte und ein Befestigungspunkt vorgesehen, wobei die Auflagepunkte so angeordnet sind, daß sie die Eckpunkte eines Dreiecks bilden. Dabei umfassen die Auflagepunkte eine auf jeder Gehäuseseite abstehende Auflagerippe 28, die nahe der Oberseite des Kopfes 102 angeordnet ist und sich parallel zur Schaftachse 26 erstreckt, und zwei das Maschinengehäuse 10 quer zur Schaftachse 26 durchdringende Hohlzylinder 29 (Fig. 3 und 5), deren Zylinderöffnungen 291 in der Gehäusewand jeweils von einem in der Gehäusewand ausgebildeten Auflagebund 30 konzentrisch umschlossen sind. Der Befestigungspunkt wird mittels eines das Maschinengehäuse 10 ebenfalls quer durchdringenden Hohlzylinders 34 und einer durch den Hohlzylinder 34 hindurchsteckbaren und in einem Gewindeloch in der Gehrungshilfe verschraubbaren Schraube realisiert. Zum Aufspannen des Maschinengehäuses 10 auf die Gehrungshilfe werden zwei an der Gehrungshilfe abstehende Stifte als Verdrehsicherung in die beiden Hohlzylinder 29 eingeführt, und die Schraube wird durch den Hohlzylinder 34 hindurchgesteckt und in der Gehrung verschraubt. Die Auflagebunde 30 stellen dabei sicher, daß das Maschinengehäuse 10 beim Aufspannen nicht verspannt oder zerstört werden kann. In Fig. 5 ist ausschnittweise eine Schalenhälfte des zweischaligen Maschinengehäuses 10 im Bereich des Kopfes 102 dargestellt. Die Hohlzylinder 29 und 34 setzen sich jeweils aus zwei miteinander fluchtenden Hohlzylinderabschnitten zusammen, die jeweils an einer Gehäuseschale einstückig angeformt sind. Jeder Hohlzylinderabschnitt erstreckt sich dabei etwa bis zur Trennfuge 104 zwischen den beiden Gehäuseschalen oder ragt im Falle des Hohlzylinders 34 etwas über diese hinaus. Beim Zusammensetzen der beiden Gehäuseschalen zum Maschinengehäuse 10 stoßen die Hohlzylinderabschnitte entweder stumpf aufeinander oder übergreifen sich etwas und bilden so die Hohlzylinder 29 und 34. Ein Hohlzylinder 29 ergibt sich dabei nahe dem Eckpunkt von Front- oder Stirnseite 102a und der Unterseite 102b des Kopfes 102 und ein Hohlzylinder 29 im Bereich der Einschnürung 103.

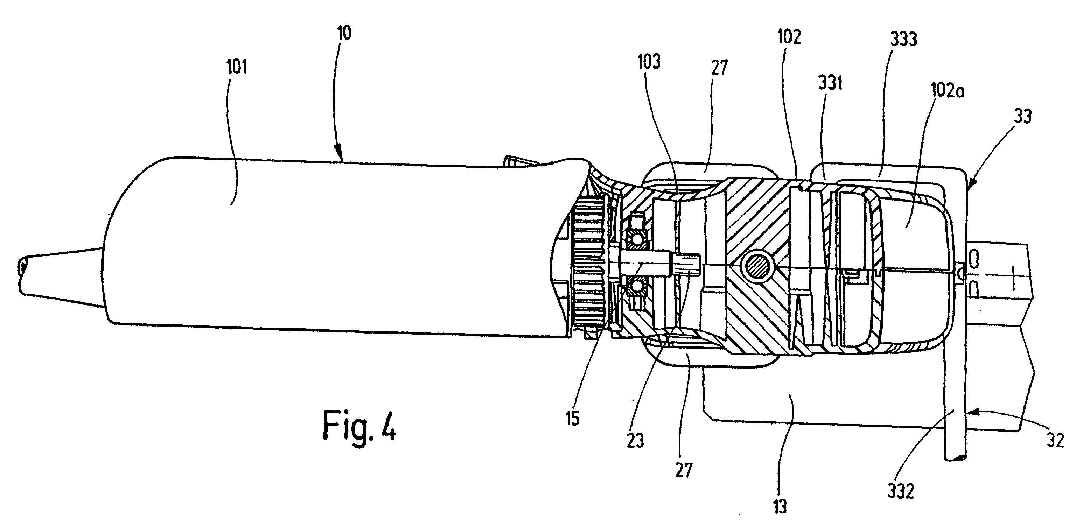

Wie in Fig. 4 illustriert ist, ist am Kopf 102 des Maschinengehäuses 10 eine Haltevorrichtung 31 für einen quer über die Frontseite 102a des Kopfes 102 unterhalb der 45°-Abschrägung 32 verlaufenden, über das Sägeblatt 13 hinaus sich erstreckenden Anschlag 32 aufweist. Ein solcher Anschlag ist insbesondere bei Verzahnung der Sägeblattzähne auf Zug von Vorteil, da das Werkstück gegen den Anschlag 32 gezogen und damit zusätzlich festgelegt wird. Der Anschlag 32 wird mittels eines U-förmig abgewinkelten stabförmigen Bügels 33 mit zwei Bügelschenkeln 331,332 und einem die beiden Bügelschenkel 331,332 miteinander verbindenden Querteil 333 realisiert. Die Haltevorrichtung 31 setzt sich zusammen aus dem das Maschinengehäuse 10 quer zur Schaftachse 26 durchsetzenden Hohlzylinder 34 (Fig. 3 und 5) und einer an der Frontseite 102a des Kopfes 102 unterhalb der 45°-Abschrägung in die Gehäusewand eingeformten Rinne 35, die mit längsverlaufenden Greifrippen 351 versehen ist. Der Hohlzylinder 34 setzt sich, wie dies erwähnt und in Fig. 5 illustriert ist, aus den beiden an je einer Gehäuseschale des Maschinengehäuses 13 angeformten Hohlzylinderabschnitten zusammen, die beim Zusammensetzen der beiden Gehäuseschalen einander übergreifen. Etwa mittig im Hohlzylinder 34 ist eine Aussparung 36 in der Hohlzylinderwand vorgesehen, durch welche ein Druckstück 37 unter der Kraft einer Druckfeder 38 (Fig. 3) hindurchtritt. Zum Gebrauch des Anschlags 32 wird der Bügel 33 mit seinem einen Bügelschenkel 331 von der einen Gehäuseseite her in den Hohlzylinder 34 eingeschoben, bis er die in Fig. 4 dargestellte Lage einnimmt. In dieser Lage liegt der Bügelschenkel 331 mit einem Welleneinstich im Bereich der Aussparung 36 im Hohlzylinder 34, so daß das Druckstück 37 unter Kraft der Druckfeder 38 in den Welleneinstich eindringt und den Bügel 33 gegen unbeabsichtigtes Herausfallen sichert. Der andere Bügelschenkel 332 liegt in der Rinne 35 ein und liegt quer zur Sägerichtung, den Anschlag 32 für das Werkstück bildend.

Alternativ kann zur Festlegung des Bügels 33 im Maschinengehäuse 10 auf die Aussparung 36 im Hohlzylinder 34 und auf Druckstück 37 mit Druckfeder 38 verzichtet werden. Der in den Hohlzylinder 34 einzuschiebende Bügelschenkel 331 ist dann so lang bemessen, daß er auf der gegenüberliegenden Gehäuseseite mit einem Vorstehende vorsteht. Auf dem Vorstehende ist ein Außengewinde aufgebracht, auf das eine Flügelmutter aufschraubbar ist, die dann den Bügel 33 gegen Herausziehen sichert.

## Patentansprüche

1. Elektrische Handwerkzeugmaschine, insbesondere Handsägemaschine, mit einem einen Gehäuseschaft (101) und einen Gehäusekopf (102) aufweisenden Maschinengehäuse (10), mit einem wechselbaren Werkzeug (13) und mit einem das Werkzeug (13) zu einer oszillierenden Hin- und Herbewegung antreibbaren, elektrischen Antrieb (11), der einen im Schaft (101) aufgenommenen, mittels eines am Maschinengehäuse (10) zugänglichen Handschalters (25) ein- und ausschaltbaren Elektromotor (14) und ein im Gehäusekopf (102) angeordnetes Getriebe (16) aufweist, wobei der Gehäuseschaft (101) im wesentlichen Stabform aufweist and wobei im Übergangsbereich vom stabförmigen Schaft (101) zum Gehäusekopf (102) eine Einschnürung (103) vorgesehen ist, **dadurch gekennzeichnet, daß** der vorzugsweise als Schieber (24) ausgebildete Handschalter (25) seitlich am Gehäusekopf (102) unterhalb der Schaftachse (26) zum Werkzeug (13) hin versetzt so angeordnet ist, daß beim Umgreifen der Einschnürung (103) der Daumen der Umgreifungshand auf seinem Betätigungsgriff (241) aufliegt und daß an der dem Werkzeug (13) zugekehrten Unterseite (102b) des Gehäusekopfes (102) eine etwa parallel zur Unterseite (102b) sich erstreckende Schutzrippe (27) auf jeder Seite des Maschinengehäuses (10) vorsteht.

2. Maschine nach Anspruch 1, **dadurch gekennzeichnet, daß** die beiden Schutzrippen (27) einstückig an das Maschinengehäuse (10) angeformt sind.

3. Maschine nach einem der Ansprüche 1 - 2, **dadurch gekennzeichnet, daß** die Front- oder Stirnseite (102a) des Gehäuseskopfes (102) unter einem Winkel von 45° zur Schaftachse (26) abgeschrägt ist.

4. Maschine nach einem der Ansprüche 1 - 3, **dadurch gekennzeichnet, daß** an mindestens einer, vorzugsweise an jeder Seitenfläche des Maschinengehäuses (10) eine Aufnahme für ein Befestigungselement und drei Auflagepunkte zum Aufspannen auf eine Gehrungshilfe vorgesehen sind, die so angeordnet sind, daß sie die Eckpunkte eines Dreiecks bilden.

5. Maschine nach Anspruch 4, **dadurch gekennzeichnet, daß** die Auflagepunkte eine auf jeder Gehäuseseite abstehende Auflagerippe (28) und zwei das Maschinengehäuse (10) quer zur Schaftachse (26) durchziehende Hohlzylinder (29) zum Einführen von gehrungshilfeseitig festgelegten Einsteckstiften aufweisen, deren Zylinderöffnungen (291) in der Gehäusewand jeweils von einem in der Gehäusewand ausgebildeten Auflagebund (30) konzentrisch umschlossen sind, und daß die Aufnahme für das als Spannschraube ausgebildete Befestigungselement ein weiterer, das Maschinengehäuse (16) quer zur Schaftachse (26) durchzuziehender Hohlzylinder (34) zum Durchstecken der in der Gehrungshilfe verschraubbaren Spannschraube ist.

6. Maschine nach Anspruch 5, **dadurch gekennzeichnet, daß** auf jeder Gehäuseseite die Auflagerippe (28) nahe der Oberseite des Gehäusekopfes (102), die eine Zylinderöffnung (29) mit Auflagebund (30) nahe dem Eckpunkt von Front- oder Stirnseite (102a) und Unterseite (102b) des Maschinengehäuses (10) und der andere Hohlzylinder (29) mit Auflagebund (30) im Bereich der Einschnürung (103) angeordnet ist.

7. Maschine nach einem der Ansprüche 1 - 6, **dadurch gekennzeichnet, daß** am Gehäusekopf (102) des Maschinengehäuses (10) eine Haltevorrichtung (31) für einen quer über die Stirn- oder Frontseite (102a) des Gehäusekopfes (102) verlaufenden Anschlag (32) vorgesehen ist.

8. Maschine nach Anspruch 7, **dadurch gekennzeichnet, daß** der Anschlag (32) von einem Bügelschenkel (332) eines U-förmig abgewinkelten, stabförmigen Bügels (33) gebildet ist und daß die Haltevorrichtung (31) einen das Maschinengehäuse (10) quer zur Schaftachse (36) durchsetzenden Hohlzylinder (34) zum vorzugsweise formschlüssigen Einstecken des anderen Bügelschenkels (331) und eine an der Stirn- oder Frontseite (102a) des Gehäusekopfes (102) nahe dessen Unterseite (102b) in die Gehäusewand eingeformte Rinne (35) zum Abstützen des den Anschlag (32) bildenden Bügelschenkels (332) aufweist.

9. Maschine nach Anspruch 8, **dadurch gekennzeichnet, daß** der in den Hohlzylinder (34) einsteckbare Bügelschenkel (331) einem Einstich aufweist und im Maschinengehäuse (10) ein Druckstück (37) angeordnet ist, das mittels einer Druckfeder (38) durch eine Aussparung (36) in der Zylinderwand des Hohlzylinders (34) hindurch formschlüssig in den Einstich eintaucht.

## Claims

1. Hand-held electric power tool, in particular handheld sawing machine, having a machine housing (10) which has a housing shank (101) and a housing head (102), having an interchangeable tool (13) and having an electric drive (11) which drives the tool (13) with an oscillating reciprocating movement and which has an electric motor (14), which is accommodated in the shank (101) and can be switched on and off by means of a hand switch (25) accessible on the machine housing (10), and a gear unit (16) arranged in the housing head (102), the housing shank (101) essentially having a bar shape, and a constriction (103) being provided in the transition region from the bar-shaped shank (101) to the housing head (102), **characterized in that** the hand switch (25), preferably designed as a slide (24), is arranged laterally on the housing head (102) below the shank axis (26) so as to be offset towards the tool (13) in such a way that, when the constriction (103) is grasped, the thumb of the grasping hand rests on the actuating handle (241) of the said hand switch, and **in that**, on the underside (102b), facing the tool (13), of the housing head (102), a protective rib (27) extending roughly parallel to the underside (102b) projects on each side of the machine housing (10).

2. Power tool according to Claim 1, **characterized in that** the two protective ribs (27) are integrally formed in one piece on the machine housing (10).

3. Power tool according either of Claims 1 and 2, **characterized in that** the front side or end face (102a) of the housing head (102) is bevelled at an angle of 45° to the shank axis (26).

4. Power tool according to one of Claims 1 to 3, **characterized in that** a receptacle for a fastening element and three supporting points for mounting on a mitre aid are provided on at least one side surface, preferably on each side surface, of the machine housing (10), the supporting points being arranged in such a way that they form the corner points of a triangle.

5. Power tool according to Claim 4, **characterized in that** the supporting points have a supporting rib (28) projecting on each housing side and two hollow cylinders (29) which pass through the machine housing (10) transversely to the shank axis (26) and are intended for the insertion of push-in pins secured on the side of the mitre aid, and the cylinder openings (291) of which, in the housing wall, are in each case concentrically enclosed by a supporting collar (30) formed in the housing wall, and **in that** the receptacle for the fastening element, which is designed as a clamping screw, is a further hollow cylinder (34), to be passed through the machine housing (16) transversely to the shank axis (26), for putting the clamping screw through, which can be screwed in the mitre aid.

6. Power tool according to Claim 5, **characterized in that**, on each housing side, the supporting rib (28) is arranged close to the top side of the housing head (102), the one cylinder opening (29) with supporting collar (30) is arranged close to the corner point of the front side or end face (102a) and underside (102b) of the machine housing (10), and the other hollow cylinder (29) with supporting collar (30) is arranged in the region of the constriction (103).

7. Power tool according to one of Claims 1 to 6, **characterized in that** a holding arrangement (31) for a stop (32) running transversely across the end face or front side (102a) of the housing head (102) of the machine housing (10) is provided on the housing head (102).

8. Power tool according to Claim 7, **characterized in that** the stop (32) is formed by a stirrup leg (332) of a bar-shaped stirrup (33) angled in a U shape, and **in that** the holding arrangement (31) has a hollow cylinder (34), which passes through the machine housing (10) transversely to the shank axis (36) and is intended for the preferably positive-locking insertion of the other stirrup leg (331), and a channel (35) which is formed in the housing wall on the end face or front side (102a) of the housing head (102) close to its underside (102b) and is intended for supporting the stirrup leg (332) forming the stop (32).

9. Power tool according to Claim 8, **characterized in that** the stirrup leg (331) which can be inserted into the hollow cylinder (34) has a recess, and a pressure piece (37) is arranged in the machine housing (10), this pressure piece (37), by means of a compression spring (38), plunging into the recess in a positive-locking manner through an aperture (36) in the cylinder wall of the hollow cylinder (34).

## Revendications

1. Machine électrique portable, en particulier scie portable, comprenant :
• un boîtier de machine (10) composé d'un tronc de boîtier (101) et d'une tête de boîtier (102),
• un outil amovible (13),
• un entraînement (11) pouvant déplacer l'outil (13) en va et vient, qui comprend un moteur électrique (14) logé dans le tronc de boîtier (101) et pouvant être connecté ou déconnecté au moyen d'un contacteur manuel (25) accessible sur le boîtier (10), ainsi qu'une transmission (16) montée dans la tête de boîtier (102) étant précisé que le tronc de boîtier (101) a essentiellement la forme d'une barre qui est reliée à la tête de boîtier par une partie rétrécie (103),
**caractérisée en ce que**
• le contacteur manuel (25) qui a de préférence la forme d'un élément coulissant (24) est décalé latéralement sur la tête de boîtier (102) en dessous de l'axe du tronc en direction de l'outil (13), de sorte que quand la partie rétrécie (103) est saisie par la main, le pouce de cette main se trouve sur la partie d'actionnement (241) du contacteur, et
• sur la face inférieure (102b) de la tête de boîtier (102) située vers l'outil (13), chaque côté du boîtier de machine (10) porte en saillie une nervure de protection (27) parallèle à cette face inférieure (102b).

2. Machine selon la revendication 1,
**caractérisée en ce que**
les deux nervures de protection (27) sont monoblocs avec le boîtier de machine (10).

3. Machine selon l'une quelconque des revendications 1 ou 2,
**caractérisée en ce que**
la face frontale avant (102a) de la tête de boîtier (102) est inclinée de 45° sur l'axe (26) du tronc de boîtier.

4. Machine selon l'une quelconque des revendications 1 à 3,
**caractérisée en ce que**
sur au moins une face latérale, et de préférence sur ses deux faces latérales, le boîtier de machine (10) présente un logement pour accueillir un moyen de fixation ainsi que trois points d'appui pour serrer la machine sur une assistance à la coupe en onglet, ces points formant les sommets d'un triangle.

5. Machine selon la revendication 4,
**caractérisée en ce que**
• les points d'appui présentent une nervure d'appui (28) en saillie sur chaque côté du boîtier ainsi que deux cylindres creux (29) traversant le boîtier de machine (10) perpendiculairement à l'axe (26) du tronc et dans lesquels peuvent être introduites des broches d'emmanchement fixées à l'assistance à la coupe en onglet, les ouvertures (291) de ces cylindres étant entourées chacune d'un collet d'appui (30) concentrique formé dans la paroi du boîtier, et
• le logement pour accueillir l'élément de fixation constitué par une vis de serrage est un autre cylindre creux (34) traversant le boîtier de machine (16) perpendiculairement à l'axe (26) du tronc, et dans lequel peut être emmanchée la vis de serrage pour être vissée dans l'assistance à la coupe en onglet.

6. Machine selon la revendication 5,
**caractérisée en ce que**
la nervure d'appui (18) située de chaque côté du boîtier est près de la face supérieure de la tête de boîtier (102),
une ouverture de cylindre (291) avec son collet d'appui (30) est près de l'angle que font la face frontale avant (102a) et la face inférieure (102b) du boîtier de machine, et l'autre cylindre creux (29) avec son collet d'appui (30) se trouve dans la zone de la partie rétrécie (103).

7. Machine selon l'une quelconque des revendications 1 à 6,
**caractérisée en ce que**
sur la tête (102) du boîtier de machine (10) est prévu un dispositif de maintien (31) pour une butée (32) disposée transversalement sur la face frontale avant (102a) de la tête de boîtier (102).

8. Machine selon la revendication 7,
**caractérisée en ce que**
la butée (32) est constituée par une branche (332) d'un étrier (33) fait d'une barre pliée en U et le dispositif de maintien (31) présente un cylindre creux (34) traversant le boîtier de machine (10) perpendiculairement à l'axe (36) du tronc et destiné à l'emmanchement avantageusement verrouillé par combinaison de formes de l'autre branche (331) de l'étrier, ainsi qu'une rainure creusée sur la face frontale avant (102) de la tête de boîtier (102) dans la paroi du boîtier (35) près de la face inférieure (102b) de celui-ci, pour servir d'appui à l'autre branche d'étrier (332) formant la butée (32).

9. Machine selon la revendication 8,
**caractérisée en ce que**
la branche d'étrier (331) emmanchable dans le cylindre creux (34) présente une entaille et dans le boîtier de machine (10) est montée une pièce de poussée (37) qui, à travers un évidement (36) de la paroi du cylindre creux (34) est enfoncée et verrouillée par combinaison de formes dans l'entaille par l'action d'un ressort de poussée (38).
